# EUROPÄISCHE PATENTSCHRIFT

(11) **EP 3 810 478 B1**
(45) Veröffentlichungstag und Bekanntmachung des Hinweises auf die Patenterteilung: **30.10.2024**
(21) Anmeldenummer: 19732315.7
(22) Anmeldetag: 18.06.2019
(51) Int. Cl.: B61C 15/10, B60L 3/10, B61L 15/00, B61L 23/04

(54) **VERFAHREN ZUR PROGNOSE EINES HAFTWERTS IN EINEM KONTAKTPUNKT ZWISCHEN EINEM RAD EINES SCHIENENFAHRZEUGS UND DER SCHIENE, VERFAHREN ZUR VERBESSERUNG DES HAFTWERTES IN EINEM KONTAKTPUNKT ZWISCHEN EINEM RAD EINES SCHIENENFAHRZEUGS UND DER SCHIENE UND VORRICHTUNG ZUR DURCHFÜHRUNG DER VERFAHREN**
METHOD FOR FORECASTING A COEFFICIENT OF FRICTION IN A CONTACT POINT BETWEEN A WHEEL OF A RAIL VEHICLE AND THE RAIL, METHOD FOR IMPROVING THE COEFFICIENT OF FRICTION IN A CONTACT POINT BETWEEN A WHEEL OF A RAIL VEHICLE AND THE RAIL, AND DEVICE FOR CARRYING OUT THE METHOD
PROCÉDÉ DE PRÉDICTION D'UNE VALEUR D'ADHÉRENCE D'UN POINT DE CONTACT ENTRE UNE ROUE D'UN VÉHICULE FERROVIAIRE ET LE RAIL, PROCÉDÉ D'AMÉLIORATION DE LA VALEUR D'ADHÉRENCE D'UN POINT DE CONTACT ENTRE UNE ROUE D'UN VÉHICULE FERROVIAIRE ET LE RAIL, ET DISPOSITIF DE MISE EN OEUVRE DES PROCÉDÉS

(30) Priorität: 19.06.2018 DE 102018209920
(43) Veröffentlichungstag der Anmeldung: 28.04.2021
(73) Patentinhaber: KNORR-BREMSE Systeme für Schienenfahrzeuge GmbH, 80809 München (DE)
(72) Erfinder: KOHL, Michael, 84036 Landshut (DE)
(86) Internationale Anmeldenummer: PCT/EP2019/065929
(87) Internationale Veröffentlichungsnummer: WO 2019/243281

(56) Entgegenhaltungen:
- WO-A1-2013/034717
- WO-A1-2015/044246
- JP-A- 2014 142 218

## Beschreibung

Die vorliegende Erfindung betrifft ein Verfahren zur Prognose eines Haftwerts in einem Kontaktpunkt zwischen Rad eines Schienenfahrzeugs und Schiene, ein Verfahren zur automatischen und optimierten Verbesserung des Haftwertes im Kontaktpunkt zwischen einem Rad eines Schienenfahrzeugs und Schienen, sowie eine Vorrichtung zur automatischen und optimierten Verbesserung des Haftwertes im Kontaktpunkt zwischen einem Rad eines Schienenfahrzeugs und Schienen.

Verschmutzungen von Schienen durch Immissionen aus Industrie und Straßenverkehr und in manchen Fällen auch durch natürliche Quellen wie Laub oder Blütenstaub bilden in Kombination mit Feuchtigkeit einen Schmierfilm, der einen Haftwert im Kontaktpunkt zwischen Rad eines Schienenfahrzeugs und Schiene stark herabsetzt. Dies kann zu einem sogenannten Gleiten führen, bei dem das Rad ohne abzurollen über die Schiene rutscht. Infolgedessen können Schienenfahrzeuge beim Anfahren einer Haltestelle oder in Gefahrensituationen bei feuchten Bedingungen erheblich schlechter Verzögern, was somit eine Erhöhung der Unfallwahrscheinlichkeit oder die Gefahr einer Signalüberfahrt oder Bahnsteigsüberfahrt und damit Verzögerungen im Betriebsablauf mit sich bringt.

Um der gesteigerten Gefahrensituation Rechnung zu tragen, passen die meisten Triebfahrzeugführer ihr Fahrverhalten den rutschigeren Bedingungen bei entsprechenden Witterungen an. Somit kommt es insbesondere bei urbanem Schienenverkehr, bei dem Fahrzeuge in kurzen Abständen hintereinander viele Haltestationen anfahren, schneller zu Verspätungen und Verzögerungen im Betriebsablauf. Zudem nimmt der Fahrgast eine besonders langsame Bahnhofs- bzw. Haltestelleneinfahrt als eine subjektive Verzögerung wahr, was zu Unmut und Unzufriedenheit führen kann.

Sandstreueinrichtungen sind seit langem im Stand der Technik als eine Möglichkeit bekannt, die Haftung zwischen Schiene und Rad eines Schienenfahrzeugs besonders bei feuchten Schienen zu erhöhen. Dabei wird Sand auf die Schienenoberfläche in den Kontaktpunkt zwischen Schiene und Rad meist über ein Druckluftsystem eingebracht, wodurch der Haftwert des Rades auf der Schiene verbessert werden kann. Denkbar sind allerdings auch andere Maßnahmen, um den Haftwert zwischen Rad und Schiene zu erhöhen. So kann beispielsweise Druckluft dazu verwendet werden die verunreinigte Schiene von Verschmutzungen zu säubern und auf diese Weise den Haftwert zu erhöhen.

Die Betätigung der Besandungsvorrichtung erfolgt in vielen Fällen manuell durch den Triebfahrzeugführer und ist somit von der Erfahrung und der subjektiven Einschätzung einer Person abhängig und mit einem Risiko menschlicher Fehleinschätzung beaufschlagt. In bestimmten anderen Fällen kann die Betätigung auch automatisch ausgelöst werden. Beispielsweise kann ein Gleitschutzsystem ein "Gleiten" des Rades auf der Schiene erkennen und als Folge die Sandstreueinrichtung betätigen. Da das Sandstreusystem eine Reaktionszeit von mehreren Sekunden aufweist, legt das Fahrzeug nach Erkennen eines Gleitens bei hohen Geschwindigkeiten noch erhebliche Wegstrecke ohne verbesserten Haftwert zurück, was negative Auswirkungen auf den Bremsweg und damit im schlimmsten Fall auf die Sicherheit mit sich bringt. Zudem wird bei manchen Systemen ein automatisches Sanden bei Notbremsungen eingeleitet.

Um möglichst frühzeitig zu erkennen, ob haftwertverbessernde Maßnahmen, wie die Besandung der Schiene, ergriffen werden müssen, gilt es den Haftwert möglichst frühzeitig zu bestimmen.

Patentdokument DE19542872 offenbart ein Verfahren zur Messung des Schmutzfilmes über einen optischen Sensor, der auf der Schiene reflektierte Laserstrahlen detektiert und auswertet und somit Rückschlüsse über den Haftwert zwischen Rad und Schiene ausgeben kann. Anhand der Beschaffenheit der Schiene können somit Gegenmaßnahmen, wie beispielsweise das Betätigen der Besandungseinrichtung eingeleitet werden. Nachteil dieser Methode ist, dass optische Sensoren am Unterflurbereich von Schienenfahrzeugen insbesondere bei widrigen Wetterbedingungen, die hinsichtlich der Ausbildung eines Schmierfilms besonders kritisch einzustufen sind, schnell verschmutzen und somit keine zuverlässigen Rückschlüsse auf den Zustand der Schienen mehr zulassen. Zudem muss für dieses Verfahren zusätzliches Equipment wie Messsensoren oder eine Laserquelle bereitgestellt werden.

Patentdokument WO 2013 034 717 A1 offenbart ein Verfahren zum Bestimmen einer wirksamen Menge eines adhäsionssteigernden Mittels, das zwischen ein Rad eines Schienenfahrzeugs und einer Schiene, auf der das Rad fährt, aufgetragen wird, basierend auf einer Gegenüberstellung der tatsächlichen Reibwirkung und der Grundreibwirkung.

Vor diesem Hintergrund ist es also die Aufgabe der Erfindung ein Verfahren zur Prognose des Haftwertes in dem Kontaktpunkt zwischen Rad des Fahrzeugs und Schiene zur Verfügung zu stellen, sodass anhand dieser Haftwertprognose eine möglichst optimale haftwertverbessernde Maßnahme, wie beispielsweise automatisches Besanden der Schienen, bei Bremsvorgängen vorgenommen werden kann und somit die Sicherheit und Zuverlässigkeit von Schienenfahrzeugen weiter erhöht werden kann.

Diese Aufgabe wird gelöst mit den Verfahren, die durch die jeweiligen Merkmale der Ansprüche 1 bzw. 16 definiert sind, sowie mit der Vorrichtung, die durch die Merkmale des Anspruch 17 definiert ist.

Die Prognose des Haftwerts zwischen Rad und Schiene wird dabei zumindest anhand des Luftdrucks, der Lufttemperatur, der Luftfeuchtigkeit und der daraus resultierenden Taupunkttemperatur ermittelt.

Das Verfahren zur Bestimmung der Intensität einer haftverbessernden Maßnahme beinhaltet eine eindeutige Zuordnungsvorschrift, mit Hilfe derer ein Haftwert, der anhand des Verfahrens zur Prognose eines Haftwertes ermittelt wurde, in eine Intensität einer haftwertverbessernden Maßnahme umgerechnet werden kann.

Die Vorrichtung zur Ausführung der beiden Verfahren umfasst dabei einen Dateneingang zur Aufnahme der relevanten Daten, ein Rechenteil zur Umrechnung des Haftwertes in eine Intensität der haftwertverbessernden Maßnahme, ein Datenausgang zur Bereitstellung und Weitergabe des ermittelten Ergebnisses der Recheneinheit und eine Bedieneinheit zum Bedienen und Überwachen der Verfahren.

Vorteilhafte Weiterbildungen sind Gegenstand der abhängigen Ansprüche.

In einer bevorzugten Ausführungsform der Erfindung werden die Daten des Gleitschutzsystems, das erkennt wann Schlupf zwischen Rad und Schiene auftritt, ebenfalls für das Verfahren zur Bestimmung des Haftwertes im Kontaktpunkt zwischen Rad und Schiene bereitgestellt.

Zudem, verwendet das Verfahren zur Bestimmung des Haftwertes vorzugsweise einen Algorithmus, wie beispielsweise ein neuronales Netz, der in der Lage ist selbstständig zu lernen und somit Informationen aufzunehmen, weiter zu verarbeiten und in die zukünftige Berechnung mit aufzunehmen. Das selbstständige Lernen könnte insbesondere anhand Informationen, die vom Gleitschutzsystem an den Algorithmus geliefert werden, durchgeführt werden. Bei erkanntem Schlupf zwischen Rad und Schiene in Situationen in denen das Verfahren keinen kritischen Haftwert prognostiziert hat, erkennt der Algorithmus seine fehlerhafte Prognose und kann sie zukünftig anpassen.

Vorzugsweise kann zusätzlich die Position des Fahrzeugs erfasst und dem Prognosemodell übermittelt werden. Anhand dieser Positionsdaten können zum einen Luftdruckdaten aufgrund veränderter Höhe oder erkannter Fahrt korrigiert werden und zum anderen der Einsatz der Besandung weiter verbessert werden. So kann die Besandung an verbotenen Stellen wie beispielsweise Weichen unterbunden oder das System an bestimmten Positionen, die als besonders gefährdet für einen niedrigen Haftwert eingestuft werden können (beispielsweise Waldgebiete mit erhöhter Vegetation in denen eine erhöhte Gefahr besteht, dass Laub auf die Schienen gelangt), angepasst werden.

Des Weiteren kann vorzugsweise das Datum und die Uhrzeit in das Prognosemodell mit einbezogen werden, um jahreszeiten- oder tageszeitenabhängige Einflüsse mit berücksichtigen zu können. Hierbei sei insbesondere auf erhöhte Taugefahr am Morgen im Frühjahr oder Herbst hingewiesen.

Als weiterer Punkt kann vorzugsweise die Geschwindigkeit in das Prognosemodell mit aufgenommen werden. Diese kann entweder durch eine gegebenenfalls ebenso berücksichtigte Positionsbestimmung oder durch fahrzeugeigene Daten zur Verfügung gestellt werden. Anhand der Geschwindigkeit können Betriebsvorschriften, wie beispielsweise das Unterlassen des Sandens bei geringen Geschwindigkeiten, automatisiert umgesetzt werden.

Zusätzlich werden vorzugsweise die Daten eines Regensensors oder die Anzahl der manuellen Scheibenwischerbetätigungen pro Zeitintervall bei der Berechnung durch das Prognosemodell berücksichtigt. Dadurch sind Rückschlüsse auf die Intensität von Regen möglich und somit auf die Feuchtigkeit auf den Schienen. Ein starker, über mehrere Minuten andauernder Platzregen hat in der Regel zur Folge, dass der haftwertverringernde Schmierfilm zwischen Rad und Schiene abgewaschen wird, und somit der Haftwert wieder zunimmt.

Vorzugsweise geht ein Helligkeitssensor, der in der Lage ist anhaltenden Sonnenschein zu identifizieren, in das Prognosemodell ein und kann es somit weiter verbessern. Die Annahme ist dabei, dass die Wahrscheinlichkeit einer feuchten Schiene bei anhaltendem Sonnenschein abnimmt und der Haftwert sich somit erhöht. Unter Umständen wird diese Annahme weiterhin unter Berücksichtigung der bereits erwähnten Temperatur, und/oder des Zeitpunkts (Datum, Uhrzeit) weiter verfeinert, da beide Faktoren ebenfalls einen Einfluss auf das Abtrocknen der Schienen haben.

Zudem ist es dem Triebfahrzeugführer vorzugsweise möglich, die Empfindlichkeit des Prognosemodells und damit die Intensität der Besandungsvorrichtung zu beeinflussen, um ihm stets eine Eingriffsmöglichkeit nach seinem persönlichen Empfinden und seinen Erfahrungen zu ermöglichen.

Um die Wahrscheinlichkeit des Kondensierens der Luftfeuchtigkeit an Schienen, was zu einer Verschlechterung des Haftwerts führt, noch genauer bestimmen zu können, geht vorzugsweise zusätzlich die Temperatur der Schienen in die Berechnung des Verfahrens ein. Dies hat den Vorteil, dass die Temperatur der Schienen nicht über die Umgebungstemperatur geschätzt werden muss und somit die Zuverlässigkeit der Vorhersage erhöht wird.

Zur weiteren Verbesserung der Prognosegenauigkeit wird vorzugsweise der zeitliche Verlauf der gemessenen bzw. in die Berechnung eingehenden Parameter gespeichert. Sofern Datenschutzrechtlich erlaubt, kann somit auch der Verlauf des Betriebsbremsbefehls, also wie schnell der Triebfahrzeugführer die verschiedenen Bremsstufen durchläuft, in das Modell einfließen um die Intensität des Besandens zu beeinflussen. Anhand dieser zusätzlichen Information kann ein schnelleres Lernverhalten des Algorithmus erzielt werden.

Vorzugsweise wird die Berechnung des Haftwertes zwischen Rad und Schiene durch die Betätigung eines Betriebsbremsbefehls oder eines Beschleunigungsbefehls ausgelöst und gegebenenfalls die Besandungsvorrichtung betätigt.

Weiterhin wird vorzugsweise an Positionen, die als widerkehrende Gefahrenstellen vom Verfahren identifiziert werden konnten, die Berechnung des Haftwertes zwischen Rad und Schiene bereits vorausschauend ausgelöst um im Bremsfall ohne Zeitverzug die haftwertverbessernde Maßnahme einleiten zu können.

Nachfolgend wird die Erfindung im Detail anhand der beigefügten Figuren näher erläutert. Sie zeigen:
- Fig. 1: Schematische Zeichnung des Prognosemodells mit seinen relevanten Eingangsparametern und der Ausgabegröße des Haftwertes zwischen Rad und Schiene.
- Fig. 2: Diagramm zur Veranschaulichung eines beispielhaften Zusammenhangs zwischen Besandungsmenge und Haftwert zwischen Rad und Schiene.

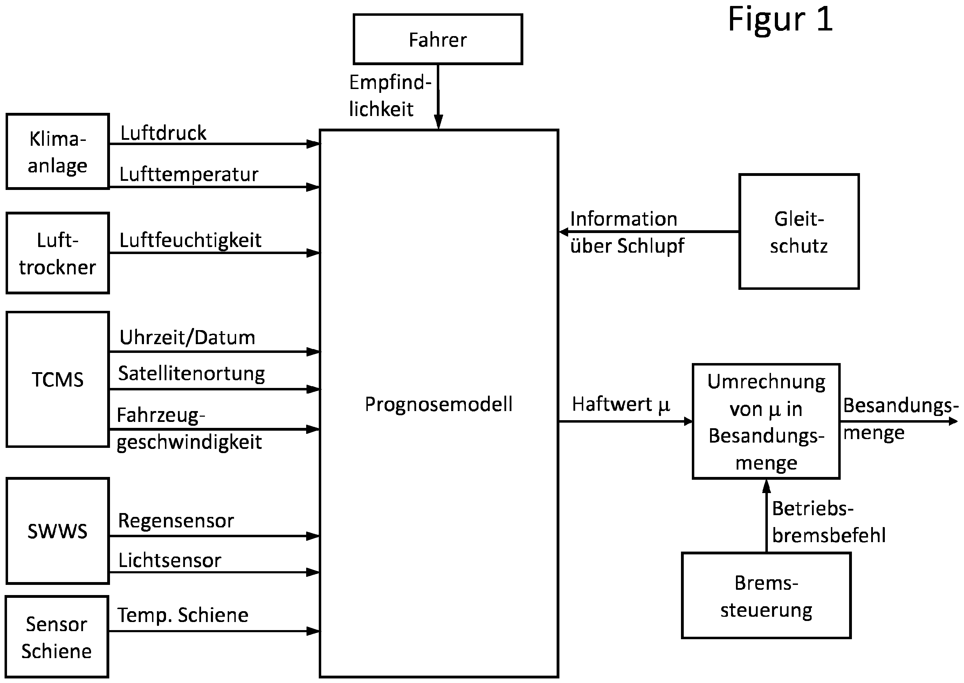

Fig. 1 zeigt eine schematische Zeichnung des Verfahrens mit dem Prognosemodell und den relevanten Eingangsparametern. Diese Parameter werden mit Hilfe einer Berechnungslogik im Prognosemodell verarbeitet und somit der Haftwert µ ermittelt.

Wie zuvor erwähnt, reichen die im Hauptanspruch genannten Parameter aus, um eine Prognose zum Haftwert µ treffen zu können. Es muss jedoch beachtet werden, dass der Wert mit einigen Unsicherheiten behaftet ist, da eine Vielzahl anderer Faktoren nicht berücksichtigt ist. Um die Qualität der Prognose also weiter zu verbessern, werden die in den Unteransprüchen genannten Parameter ebenfalls herangezogen. Eine möglichst genaue Vorhersage des Haftwertes µ und somit ein präziserer Einsatz beispielsweise einer Besandungsvorrichtung sind somit möglich.

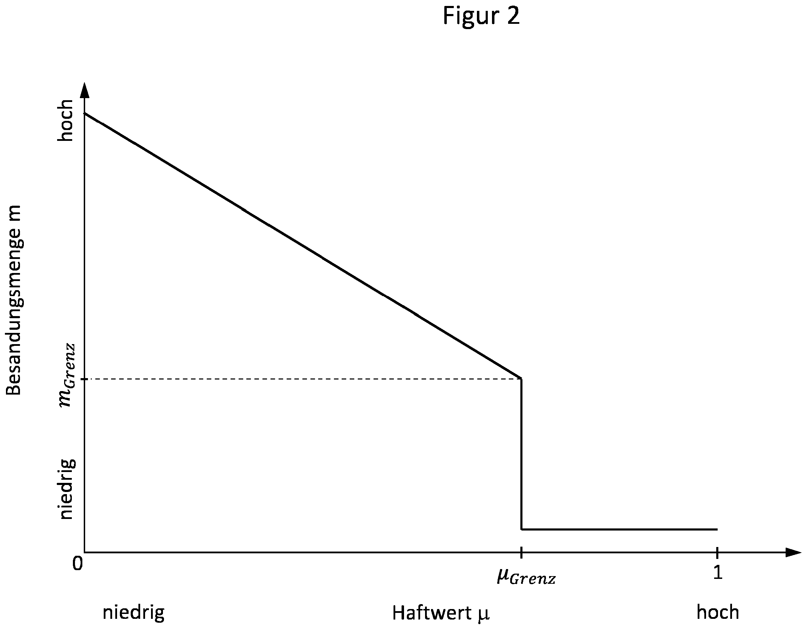

**Fig. 2** zeigt ein Diagramm zur Veranschaulichung eines beispielhaften Zusammenhangs zwischen dem Haftwert zwischen Rad und Schiene und der Intensität der Besandung, die in diesem Beispiel als haftwertverbessernde Maßnahme dienen soll. Dabei entspricht ein hoher Haftwert µ einem geringen Schmierfilm im Kontaktpunkt zwischen Rad und Schiene und bedarf somit keiner haftwertverbessernden Maßnahmen.

Es ist zu erkennen, dass ab einem Schwellenwert des Haftwertes die Besandung der Schiene sprungartig mit einer Mindestmenge einsetzt. Der konstante Anteil bei hohen Haftwerten ist darauf zurückzuführen, dass bis zu einem gewissen Grenzhaftwert davon ausgegangen werden kann, dass eine ausreichend große Haftung zwischen Rad und Schiene besteht, um einen üblichen Bremsvorgang durchzuführen. Zwar würde in diesem Bereich eine leichte Besandung ebenfalls eine Verbesserung des Haftwertes herbeiführen, jedoch sind die Sandvorräte die ein Schienenfahrzeug mit sich führen kann begrenzt, weshalb die Sandungsbetätigung dosiert eingesetzt werden sollte. Der Sprung ab dem Grenzhaftwert µ_{Grenz} ergibt sich aus der Mindestmenge an Sand die durch die Sandungsbetätigung aufgebracht werden muss, um die gewünschte Verbesserung des Haftwertes µ zu erzielen. Danach verläuft die Beziehung linear, was bedeutet, dass sich mit dem sich verringerndem Haftwert µ die Intensität der Sandungsbetätigung gleichmäßig ansteigt. Aufgrund eines solchen Zusammenhangs ermittelt das Verfahren zur Bestimmung der Intensität einer haftwertverbessernden Maßnahme ein Ergebnis.

Im Folgenden wird eine Ausführungsform der Erfindung detailliert beschrieben.

Das Verfahren, welches auf einem selbstlernenden Algorithmus beruht, berechnet in regelmäßigen Abständen einen Haftwert im Kontaktpunkt zwischen einem Rad eines Schienenfahrzeugs und der Schiene und ermittelt eine im Bremsfall aufzubringende Besandungsmenge anhand einer hinterlegten Beziehung (siehe Fig. 2) zwischen Besandungsmenge und einem jeweiligen Haftwert. Als Parameter stehen ihm dabei der Luftdruck, sowie die Lufttemperatur, die jeweils dem Klimaanlagesystem entnommen werden können, und die Luftfeuchtigkeit, die dem Air Dryer der Bremsanlage zu entnehmen ist, zur Verfügung.

Darüber hinaus kann das Verfahren auf die Position, die über ein GPS-System bestimmt wurde, beispielsweise aus dem Train Control & Management System (TCMS) zurückgreifen. Über die Positionsbestimmung und die Verwendung des lernenden Systems, kann der Haftwert insbesondere in Streckenabschnitten in denen der Haftwert µ besonderen Einflüssen durch beispielsweise die Vegetation unterworfen ist, genauer abgeschätzt und vorausgesehen werden. Zudem kann die Besandung an Stellen, an denen ein Verbot der Besandung durch Betriebsvorschriften besteht, wie beispielsweise an Weichen, unterbunden werden. Durch die Verwendung der Geschwindigkeit aus dem TCMS können weitere Betriebsvorschriften hinsichtlich der Maximalgeschwindigkeit für das Sanden eingehalten werden.

Die Hinzunahme der Parameter Datum und Uhrzeit, die der Bremssteuerung entnommen werden können, helfen weiterhin eine genauere Berechnung des Haftwertes zu erzielen.

Das Verfahren kann zudem auf einen Regensensor oder die Anzahl der manuellen Scheibenwischerbetätigungen in einem bestimmen Zeitintervall zurückgreifen und somit Rückschlüsse auf die Regenintensität ziehen. Da der Haftwert stark von der Feuchtigkeit der Schiene abhängt, ist somit eine genauere Berechnung des Haftwertes möglich. Zudem kann anhand der Regenerkennung dem Sonderfall eines Platzregens Rechnung getragen werden. Bei einem anhaltenden Platzregen wird die Schiene von dem Schmutzfilm freigewaschen und der Haftwert erhöht sich wieder deutlich.

Durch die Hinzunahme der Daten eines Helligkeitssensors, kann der Einfluss der Sonne ebenfalls in die Rechnung mit eingehen. Da bei Sonnenschein die Schiene schneller wieder trocknet und somit der Haftwert beeinflusst wird, kann das Ergebnis der Berechnung weiter verbessert werden.

Um dem Triebfahrzeugführer immer die Möglichkeit zu geben seine Erfahrungen und sein persönliches Empfinden in das Verfahren mit einzubringen, kann eine Empfindlichkeitsstufe der Berechnung manuell vorgegeben werden. Bei Empfindlichkeitsstufe "0" wird der Haftwert µ stets auf das Maximum (also 1) gesetzt und Empfindlichkeitsstufe "10" legt den Haftwert µ auf das Minimum (also 0) fest. Entsprechende Empfindlichkeitsstufen dazwischen stauchen oder strecken die Kurve aus Fig. 2).

Des Weiteren werden Informationen des Gleitschutzes über den Schlupf des Rades auf der Schiene an den selbstlernenden Algorithmus zurückgegeben. Diese Informationen lassen den Rückschluss zu, dass im Falle eines Schlupfes des Rades ohne das die Schiene besandet wurde, offensichtlich ein falscher Haftwert berechnet wurde. Somit kann die Berechnung korrigiert und verbessert werden.

Die eigentliche Besandung erfolgt, wenn der Haftwert nach dem Diagramm in Fig. 2 eine Besandung und somit eine Verbesserung des Haftwertes erfordert und der Betriebsbremsbefehl gegeben wurde. Da bei Schienenfahrzeugen üblicherweise eine Bremskraft stetig aufgebaut wird und somit das Rad auch bei niedrigem Haftwert in der Regel nicht unmittelbar nach dem Bremsbefehl blockiert und somit das Gleitschutzsystem auslöst, wird die Besandung der Schiene um einige Sekunden vorher ausgelöst als beim herkömmlichen Auslösen durch das Gleitschutzsystem nach dem Stand der Technik. Somit kann davon ausgegangen werden, dass genügend Sand zur Verbesserung des Haftwertes auf den Schienen liegt, wenn die Bremskraft zur Verfügung steht, die herkömmlicherweise das Gleiten ausgelöst hätte. Eine Verbesserung der Sicherheit und des Komforts wird demnach erreicht.

Sofern ein Besanden bei einer Schnellbremsung nicht obligatorisch durchgeführt wird, ist eine Anwendung des Verfahrens auch in diesem Fall möglich. Allerdings ist dafür ein Sicherheitsnachweis erforderlich

## Patentansprüche

1. Verfahren zur Prognose eines Haftwertes in einem Kontaktpunkt zwischen einer Schiene und einem darauf abrollenden Rad eines Schienenfahrzeugs, wobei
ein Luftdruck der Umgebungsluft,
eine Lufttemperatur der Umgebungsluft,
eine Luftfeuchtigkeit der Umgebungsluft und
eine sich daraus ergebende Taupunkttemperatur zur Prognose des Haftwertes im Kontaktpunkt zwischen Schiene und Rad verwendet wird.

2. Verfahren zur Prognose eines Haftwertes in einem Kontaktpunkt zwischen einer Schiene und einem darauf abrollenden Rad eines Schienenfahrzeugs gemäß Anspruch 1, wobei das Verfahren einen Algorithmus einsetzt, der selbstlernend agiert.

3. Verfahren zur Prognose eines Haftwertes in einem Kontaktpunkt zwischen einer Schiene und einem darauf abrollenden Rad eines Schienenfahrzeugs gemäß Anspruch 2, wobei Informationen des Gleitschutzsystems in das Verfahren zur Prognose des Haftwertes eingehen.

4. Verfahren zur Prognose eines Haftwertes in einem Kontaktpunkt zwischen einer Schiene und einem darauf abrollenden Rad eines Schienenfahrzeugs gemäß Anspruch 1 bis 3, wobei eine Positionsbestimmung mit Hilfe eines satellitengestützten Ortungssystems in das Verfahren eingeht.

5. Verfahren zur Prognose eines Haftwertes in einem Kontaktpunkt zwischen einer Schiene und einem darauf abrollenden Rad eines Schienenfahrzeugs gemäß Anspruch 1 bis 4, wobei die Uhrzeit und/oder das Datum in das Verfahren eingehen.

6. Verfahren zur Prognose eines Haftwertes in einem Kontaktpunkt zwischen einer Schiene und einem darauf abrollenden Rad eines Schienenfahrzeugs gemäß einem der Ansprüche 1 bis 5, wobei die Fahrzeuggeschwindigkeit in das Verfahren eingeht.

7. Verfahren zur Prognose eines Haftwertes in einem Kontaktpunkt zwischen einer Schiene und einem darauf abrollenden Rad eines Schienenfahrzeugs gemäß Anspruch 6, wobei die Fahrzeuggeschwindigkeit über ein satellitengestütztes Ortungssystem oder durch die Verwendung von fahrzeugeigenen Daten erfolgt.

8. Verfahren zur Prognose eines H'aftwertes in einem Kontaktpunkt zwischen einer Schiene und einem darauf abrollenden Rad eines Schienenfahrzeugs gemäß einem der Ansprüche 1 bis 7, wobei Daten eines Regensensors und/oder eine Anzahl der manuellen Scheibenwischerbetätigungen in einem Zeitintervall in das Verfahren eingehen.

9. Verfahren zur Prognose eines Haftwertes in einem Kontaktpunkt zwischen einer Schiene und einem darauf abrollenden Rad eines Schienenfahrzeugs gemäß einem der Ansprüche 1 bis 8, wobei die über einen Helligkeitssensor erfasste Helligkeit der Umgebung in das Verfahren eingeht.

10. Verfahren zur Prognose eines Haftwertes in einem Kontaktpunkt zwischen einer Schiene und einem darauf abrollenden Rad eines Schienenfahrzeugs gemäß einem der Ansprüche 1 bis 9, wobei manuell eine Einstellung der Empfindlichkeit der Vorrichtung durchführbar ist, wodurch die Intensität der haftverbessernden Maßnahme beeinflusst wird.

11. Verfahren zur Prognose eines Haftwertes in einem Kontaktpunkt zwischen einer Schiene und einem darauf abrollenden Rad eines Schienenfahrzeugs gemäß einem der Ansprüche 1 bis 10, wobei die Temperatur der Schiene in das Verfahren eingeht.

12. Verfahren zur Prognose eines Haftwertes in einem Kontaktpunkt zwischen einer Schiene und einem darauf abrollenden Rad eines Schienenfahrzeugs gemäß einem der Ansprüche 1 bis 11, wobei zusätzlich zu den aktuellen Werten der für das Verfahren verwendeten Parameter auch deren zeitlicher Verlauf aufgenommen wird.

13. Verfahren zur Prognose eines Haftwertes in einem Kontaktpunkt zwischen einer Schiene und einem darauf abrollenden Rad eines Schienenfahrzeugs gemäß einem der Ansprüche 1 bis 12, wobei eine Berechnung des Haftwertes durch einen Betriebsbremsbefehl ausgelöst wird.

14. Verfahren zur Prognose eines Haftwertes in einem Kontaktpunkt zwischen einer Schiene und einem darauf abrollenden Rad eines Schienenfahrzeugs gemäß einem der Ansprüche 1 bis 13, wobei aufgrund der Positionsbestimmung gemäß Anspruch 4 und damit erkennbarer wiederkehrender potentieller Gefahrenstellen die Berechnung des Haftwertes unmittelbar vor Eintritt der potentiellen Gefahrenstellen vorausschauend ausgelöst wird.

15. Verfahren zur Prognose eines Haftwertes in einem Kontaktpunkt zwischen einer Schiene und einem darauf abrollenden Rad eines Schienenfahrzeugs gemäß einem der Ansprüche 1 bis 14, wobei die Berechnung des Haftwertes stetig in festgelegten Zeitintervallen durchgeführt wird.

16. Verfahren zur automatischen und optimierten Verbesserung des Haftwertes im Kontaktpunkt zwischen einem Rad eines Schienenfahrzeugs und Schienen, wobei der gemäß dem Verfahren nach den Ansprüchen 1 bis 15 ermittelte Haftwert anhand einer Vorschrift, die eine eindeutige Zuordnung eines Haftwertes zu einer Intensität einer haftwertverbessernden Maßnahme beinhaltet, in eine Intensität der haftwertverbessernden Maßnahme umgerechnet wird.

17. Vorrichtung zur automatischen und optimierten Verbesserung des Haftwertes im Kontaktpunkt zwischen einem Rad eines Schienenfahrzeugs und Schienen, dazu ausgebildet das Verfahren gemäß Anspruch 16 durchzuführen, aufweisend:
einen Dateneingang, der eine Schnittstelle für jeden der im Verfahren zur Prognose des Haftwertes gemäß den Ansprüchen 1 bis 15 verwendeten Parameter aufweist,
eine Recheneinheit zur Durchführung des Verfahrens zur automatischen und optimierten Verbesserung des Haftwertes im Kontaktpunkt zwischen einem Rad eines Schienenfahrzeugs und Schienen gemäß Anspruch 16,
einen Datenausgang zur Bereitstellung der durch das Verfahren gemäß Anspruch 16 ermittelten Intensität zur Verbesserung des Haftwertes im Kontaktpunkt zwischen Rad und Schiene, und
eine Bedieneinheit, zum Bedienen der Vorrichtung.

## Claims

1. Method for forecasting an adhesion coefficient at a contact point between a rail and a wheel of a rail vehicle rolling thereon, wherein
an air pressure of the ambient air,
an air temperature of the ambient air,
a humidity of the ambient air and
a resulting dew point temperature are used for forecasting the adhesion coefficient at the contact point between the rail and wheel.

2. Method for forecasting an adhesion coefficient at a contact point between a rail and a wheel of a rail vehicle rolling thereon according to claim 1, wherein the method uses an algorithm that acts in a self-learning manner.

3. Method for forecasting an adhesion coefficient at a contact point between a rail and a wheel of a rail vehicle rolling thereon according to claim 2, wherein information from the anti-skid system is incorporated into the method for forecasting the adhesion coefficient.

4. Method for forecasting an adhesion coefficient at a contact point between a rail and a wheel of a rail vehicle rolling thereon according to claim 1 to 3, wherein a position determination using a satellite-based localisation system is incorporated into the method.

5. Method for forecasting an adhesion coefficient at a contact point between a rail and a wheel of a rail vehicle rolling thereon according to claim 1 to 4, wherein the time and/or the date are incorporated into the method.

6. Method for forecasting an adhesion coefficient at a contact point between a rail and a wheel of a rail vehicle rolling thereon according to any one of claims 1 to 5, wherein the vehicle speed is incorporated into the method.

7. Method for forecasting an adhesion coefficient at a contact point between a rail and a wheel of a rail vehicle rolling thereon according to claim 6, wherein the vehicle speed takes place via a satellite-based localisation system or by using data from the vehicle itself.

8. Method for forecasting an adhesion coefficient at a contact point between a rail and a wheel of a rail vehicle rolling thereon according to any one of claims 1 to 7, wherein data from a rain sensor and/or a number of manual windscreen wiper actuations in a time interval are incorporated into the method.

9. Method for forecasting an adhesion coefficient at a contact point between a rail and a wheel of a rail vehicle rolling thereon according to any one of claims 1 to 8, wherein the brightness of the surroundings detected by a brightness sensor is incorporated into the method.

10. Method for forecasting an adhesion coefficient at a contact point between a rail and a wheel of a rail vehicle rolling thereon according to any one of claims 1 to 9, wherein the sensitivity of the device can be adjusted manually, thereby influencing the intensity of the adhesion-improving measure.

11. Method for forecasting an adhesion coefficient at a contact point between a rail and a wheel of a rail vehicle rolling thereon according to any one of claims 1 to 10, wherein the temperature of the rail is incorporated into the method.

12. Method for forecasting an adhesion coefficient at a contact point between a rail and a wheel of a rail vehicle rolling thereon according to any one of claims 1 to 11, wherein, in addition to the current values of the parameters used for the method, their progression over time is also recorded.

13. Method for forecasting an adhesion coefficient at a contact point between a rail and a wheel of a rail vehicle rolling thereon according to any one of claims 1 to 12, wherein a calculation of the adhesion coefficient is triggered by a service brake command.

14. Method for forecasting an adhesion coefficient at a contact point between a rail and a wheel of a rail vehicle rolling thereon according to any one of claims 1 to 13, wherein, based on the position determination according to claim 4 and recurring potential danger points that can be recognised in this way, the calculation of the adhesion coefficient is triggered in advance immediately before the potential danger points are reached.

15. Method for forecasting an adhesion coefficient at a contact point between a rail and a wheel of a rail vehicle rolling thereon according to any one of claims 1 to 14, wherein the calculation of the adhesion coefficient is carried out continuously at fixed time intervals.

16. Method for automatically and optimally improving the adhesion coefficient at the contact point between a wheel of a rail vehicle and rails, wherein the adhesion coefficient determined in accordance with the method according to claims 1 to 15 is converted, based on a rule which contains a unique assignment of an adhesion coefficient to an intensity of an adhesion-improving measure, into an intensity of the adhesion-improving measure.

17. Device for automatically and optimally improving the adhesion coefficient at the contact point between a wheel of a rail vehicle and rails, said device being designed to carry out the method according to claim 16 and having:
a data input having an interface for each of the parameters used in the method for forecasting the adhesion coefficient according to claims 1 to 15,
a computing unit for carrying out the method for automatically and optimally improving the adhesion coefficient at the contact point between a wheel of a rail vehicle and rails according to claim16,
a data output for providing the intensity, determined by the method according to claim 16, for improving the adhesion coefficient at the contact point between the wheel and the rail, and
an operating unit for operating the device.

## Revendications

1. Procédé de prévision d'une valeur d'adhérence à un point de contact entre un rail et une roue d'un véhicule ferroviaire roulant sur celui-ci, dans lequel
une pression d'air de l'air ambiant,
une température d'air de l'air ambiant,
une humidité d'air de l'air ambiant et
une température de point de rosée en résultant est utilisée pour la prévision de la valeur d'adhérence au point de contact entre le rail et la roue.

2. Procédé de prévision d'une valeur d'adhérence à un point de contact entre un rail et une roue d'un véhicule ferroviaire roulant sur celui-ci selon la revendication 1, dans lequel le procédé utilise un algorithme qui agit par auto-apprentissage.

3. Procédé de prévision d'une valeur d'adhérence à un point de contact entre un rail et une roue d'un véhicule ferroviaire roulant sur celui-ci selon la revendication 2, dans lequel des informations du système antidérapage interviennent dans le procédé de prévision de la valeur d'adhérence.

4. Procédé de prévision d'une valeur d'adhérence à un point de contact entre un rail et une roue d'un véhicule ferroviaire roulant sur celui-ci selon les revendications 1 à 3, dans lequel une détermination de position à l'aide d'un système de localisation assisté par satellite intervient dans le procédé.

5. Procédé de prévision d'une valeur d'adhérence à un point de contact entre un rail et une roue d'un véhicule ferroviaire roulant sur celui-ci selon les revendications 1 à 4, dans lequel l'heure et/ou la date interviennent dans le procédé.

6. Procédé de prévision d'une valeur d'adhérence à un point de contact entre un rail et une roue d'un véhicule ferroviaire roulant sur celui-ci selon l'une quelconque des revendications 1 à 5, dans lequel la vitesse du véhicule intervient dans le procédé.

7. Procédé de prévision d'une valeur d'adhérence à un point de contact entre un rail et une roue d'un véhicule ferroviaire roulant sur celui-ci selon la revendication 6, dans lequel la vitesse du véhicule est obtenue par un système de localisation assisté par satellite ou par l'utilisation de données propres au véhicule.

8. Procédé de prévision d'une valeur d'adhérence à un point de contact entre un rail et une roue d'un véhicule ferroviaire roulant sur celui-ci selon l'une quelconque des revendications 1 à 7, dans lequel des données d'un capteur de pluie et/ou un nombre d'actionnements d'essuie-glace manuels dans un intervalle de temps interviennent dans le procédé. -

9. Procédé de prévision d'une valeur d'adhérence à un point de contact entre un rail et une roue d'un véhicule ferroviaire roulant sur celui-ci selon l'une quelconque des revendications 1 à 8, dans lequel la luminosité de l'environnement détectée par un capteur de luminosité intervient dans le procédé.

10. Procédé de prévision d'une valeur d'adhérence à un point de contact entre un rail et une roue d'un véhicule ferroviaire roulant sur celui-ci selon l'une quelconque des revendications 1 à 9, dans lequel un réglage de la sensibilité du dispositif peut être mis en oeuvre manuellement, moyennant quoi l'intensité de la mesure d'amélioration de l'adhérence est influencée.

11. Procédé de prévision d'une valeur d'adhérence à un point de contact entre un rail et une roue d'un véhicule ferroviaire roulant sur celui-ci selon l'une quelconque des revendications 1 à 10, dans lequel la température du rail intervient dans le procédé.

12. Procédé de prévision d'une valeur d'adhérence à un point de contact entre un rail et une roue d'un véhicule ferroviaire roulant sur celui-ci selon l'une quelconque des revendications 1 à 11, dans lequel, en plus des valeurs actuelles des paramètres utilisés pour le procédé, leur évolution temporelle est également enregistrée.

13. Procédé de prévision d'une valeur d'adhérence à un point de contact entre un rail et une roue d'un véhicule ferroviaire roulant sur celui-ci selon l'une quelconque des revendications 1 à 12, dans lequel un calcul de la valeur d'adhérence est déclenché par l'intermédiaire d'une instruction de freinage de service.

14. Procédé de prévision d'une valeur d'adhérence à un point de contact entre un rail et une roue d'un véhicule ferroviaire roulant sur celui-ci selon l'une quelconque des revendications 1 à 13, dans lequel, sur la base de la détermination de position selon la revendication 4 et de points de danger potentiels récurrents ainsi reconnaissables, le calcul de la valeur d'adhérence est déclenché prévisionnellement immédiatement avant que les points de danger potentiels ne soient atteints.

15. Procédé de prévision d'une valeur d'adhérence à un point de contact entre un rail et une roue d'un véhicule ferroviaire roulant sur celui-ci selon l'une quelconque des revendications 1 à 14, dans lequel le calcul de la valeur d'adhérence est continuellement mis en oeuvre à des intervalles de temps définis.

16. Procédé d'amélioration automatique et optimisée de la valeur d'adhérence au point de contact entre une roue d'un véhicule ferroviaire et des rails, dans lequel la valeur d'adhérence déterminée selon le procédé selon les revendications 1 à 15 est convertie en une intensité d'une mesure d'amélioration de la valeur d'adhérence à l'aide d'une directive qui contient une attribution claire d'une valeur d'adhérence à une intensité d'une mesure d'amélioration de la valeur d'adhérence.

17. Dispositif pour l'amélioration automatique et optimisée de la valeur d'adhérence au point de contact entre une roue d'un véhicule ferroviaire et des rails, conçu pour mettre en oeuvre le procédé selon la revendication 16, présentant :
une entrée de données qui présente une interface pour chacun des paramètres utilisés dans le procédé de prévision de la valeur d'adhérence selon les revendications 1 à 15,
une unité de calcul pour mettre en oeuvre le procédé d'amélioration automatique et optimisée de la valeur d'adhérence au point de contact entre une roue d'un véhicule ferroviaire et des rails selon la revendication 16,
une sortie de données pour fournir l'intensité déterminée par le procédé selon la revendication 16 pour améliorer la valeur d'adhérence au point de contact entre la roue et le rail, et
une unité de commande pour utiliser le dispositif.
